# FASCICULE DE BREVET EUROPEEN

(11) **EP 3 894 198 B1**
(45) Date de publication et mention de la délivrance du brevet: **24.01.2024**
(21) Numéro de dépôt: 19839381.1
(22) Date de dépôt: 11.12.2019
(51) Int. Cl.: B29C 73/02, B64C 27/46, F01D 5/00, B29C 70/00

(54) **RÉPARATION DE PIÈCES EN MATERIAU COMPOSITE À MATRICE ORGANIQUE**
REPARATUR VON TEILEN AUS VERBUNDMATERIAL MIT ORGANISCHER MATRIX
REPAIR OF ORGANIC MATRIX COMPOSITE PARTS

(30) Priorité: 13.12.2018 FR 1872885
(43) Date de publication de la demande: 20.10.2021
(73) Titulaire: SAFRAN AIRCRAFT ENGINES, 75015 Paris (FR)
(72) Inventeur: CHARLAS, Mathieu, Julien, 77550 MOISSY-CRAMAYEL (FR)
(74) Mandataire: Cabinet Beau de Loménie
(86) Numéro de dépôt international: PCT/FR2019/053014
(87) Numéro de publication internationale: WO 2020/120902

(56) Documents cités:
- US-A- 5 833 795
- US-A1- 2015 328 847
- US-B2- 9 156 240

## Description

### Domaine Technique

L'invention concerne la réparation de pièces en matériau composite à matrice organique (CMO), c'est-à-dire comportant un renfort fibreux densifié par une matrice de nature organique.

### Technique antérieure

Un procédé usuel d'obtention de pièces en matériau composite est le procédé par voie liquide. Le procédé par voie liquide consiste à réaliser une préforme fibreuse ayant sensiblement la forme d'une pièce à réaliser, et destinée à constituer le renfort du matériau composite, et à imprégner cette préforme par une composition liquide contenant un précurseur du matériau de la matrice. Le précurseur se présente habituellement sous forme d'un polymère, tel qu'une résine thermoplastique ou thermodurcissable, éventuellement dilué dans un solvant. La transformation du précurseur en matrice est réalisée par traitement thermique, après élimination du solvant éventuel et réticulation du polymère. La fabrication d'une aube en matériau composite à matrice organique de moteur aéronautique à turbine à gaz est notamment décrite dans le document US 2016/243777.

Le document US 2015/328847 A1 décrit un procédé de réparation d'une pièce en matériau composite à matrice organique comprenant le retrait du matériau composite au niveau de la zone endommagée, de manière à former une portion évidée, le dépôt d'une résine de réparation dans la portion évidée et la réticulation de la résine de réparation, dans lequel la résine de réparation est chargée avec des particules aptes à être détectées magnétiquement.

Les pièces en CMO peuvent être endommagées à la suite d'un choc ou impact. C'est le cas par exemple des aubes ou des carters de soufflante de moteur aéronautique qui sont soumis en service à des impacts avec des objets étrangers tels que des oiseaux ou débris quelconques. La zone endommagée doit impérativement être réparée afin de retrouver l'intégrité de la résistance structurale et éviter toute propagation de défauts à partir de la zone endommagée avant de pourvoir remettre la pièce en service.

La plupart des pièces en CMO comprennent une couche de peinture à leur surface qui recouvre le matériau à matrice organique. Aussi, la réparation d'une pièce en CMO peinte comprend en outre du remplacement de la zone endommagée du CMO, la réfection de la peinture sur l'ensemble de la zone. Par conséquent, une fois la réparation terminée, la zone réparée n'est plus visible. Or, il est souhaitable de pouvoir localiser une réparation dans une pièce en CMO, par exemple pour des raisons d'intégrité mécanique car il est important de conserver une distance de sécurité minimale entre deux réparations.

### Exposé de l'invention

L'invention selon la revendication 1 a pour but de proposer une solution pour la réparation de pièces en matériau composite à matrice organique permettant de localiser la portion ou zone réparée même si celle-ci n'est pas détectable visuellement.

Ce but est atteint grâce à un procédé de réparation d'une pièce en matériau composite à matrice organique recouverte d'au moins une couche de peinture comprenant :
a) le retrait de la peinture au niveau d'une zone endommagée de la pièce,
b) le retrait du matériau composite au niveau de la zone endommagée de manière à former une portion évidée,
c) le dépôt d'une résine de réparation dans la portion évidée,
d) la réticulation de la résine de réparation,
e) l'application d'au moins une couche de peinture sur la zone de réparation,

dans lequel la résine de réparation est chargée avec des particules aptes à être détectées magnétiquement,
le procédé comprenant en outre, avant les étapes a) à e), une étape de contrôle de l'absence d'une résine de réparation chargée avec des particules aptes à être détectées magnétiquement à une distance déterminée de la zone endommagée.

En chargeant la résine de réparation avec des particules qui sont aptes à être détectées magnétiquement, il est possible d'identifier et de localiser une ou des zones ayant été déjà été réparées sur une pièce en matériau composite par simple détection magnétique. La présence d'une couche de peinture à la surface du matériau composite n'est plus un obstacle à la détection de zones de réparation.

Ainsi, si une ou plusieurs réparations avec une résine de réparation chargée avec des particules aptes à être détectées magnétiquement ont déjà été effectuées à une distance trop proche de la zone endommagée, cela peut être détecté. Dans un tel cas, la nouvelle réparation n'est pas réalisée car impossible et la pièce est mise au rebut.

Selon une première caractéristique du procédé de réparation de l'invention, les particules aptes à être détectées magnétiquement sont des particules de matériau ferromagnétique. La présence d'une ou plusieurs zones réparées dans la pièce peut être repérée par détection du champ magnétique émis par les particules ferromagnétiques présentes dans la résine de réparation. Dans ce cas, la résine de réparation contient de préférence entre 1 0% et 50% en masse de particules de matériau ferromagnétique.

Selon une deuxième caractéristique du procédé de réparation de l'invention, les particules aptes à être détectées magnétiquement sont des particules de matériau paramagnétique ou superparamagnétique. La présence d'une ou plusieurs zones réparées dans la pièce peut être repérée par la réponse magnétique des particules paramagnétiques ou superparamagnétiques présentes dans la résine de réparation. Dans ce cas, la résine de réparation contient de préférence entre 1% et 10% en masse de particules de matériau paramagnétique ou superparamagnétique.

Un aspect non couvert par les revendications a également pour objet une pièce en matériau composite à matrice organique recouverte d'au moins une couche de peinture, la pièce comportant au moins une portion de réparation présente dans le matériau composite à matrice organique, ladite portion comprenant une résine de réparation réticulée, dans laquelle la résine de réparation est chargée avec des particules aptes à être détectées magnétiquement.

Selon une première caractéristique de la pièce, les particules aptes à être détectées magnétiquement sont des particules de matériau ferromagnétique. La présence d'une ou plusieurs zones réparées dans la pièce peut être repérée par détection du champ magnétique émis par les particules ferromagnétiques présentes dans la résine de réparation. Dans ce cas, la résine de réparation contient de préférence entre 10% et 50% en masse de particules de matériau ferromagnétique.

Selon une deuxième caractéristique de la pièce, les particules aptes à être détectées magnétiquement sont des particules de matériau paramagnétique ou superparamagnétique. La présence d'une ou plusieurs zones réparées dans la pièce peut être repérée par la réponse magnétique des particules paramagnétiques ou superparamagnétiques présentes dans la résine de réparation. Dans ce cas, la résine de réparation contient de préférence entre 1% et 10% en masse de particules de matériau paramagnétique ou superparamagnétique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
[Fig. 1] La figure 1 est une vue en perspective d'un moteur aéronautique comprenant une soufflante,
[Fig. 2] La figure 2 est une vue schématique en perspective d'une aube de la soufflante du moteur de la figure 1 présentant un zone endommagée,
[Fig. 3] La figure 3 est une vue partielle en coupe de l'aube de la figure 2 suivant le plan de coupe III,
[Fig. 4] La figure 4 montre la partie d'aube de la figure 3 après préparation de la zone endommagée,
[Fig. 5] La figure 5 montre la partie d'aube de la figure 4 après dépôt d'une résine de réparation,
[Fig. 6] La figure 6 montre la partie d'aube de la figure 5 après réticulation de la résine de réparation et réfection des couches de primaire et de peinture.

### Description des modes de réalisation

L'invention s'applique d'une manière générale à toute pièce en matériau composite à matrice organique, c'est-à-dire comprenant un renfort fibreux réalisé par exemple avec des fibres de carbone, de verre ou de céramique et densifié par une matrice correspondant typiquement à une résine de polymère, tel qu'une résine thermoplastique ou thermodurcissable, éventuellement dilué dans un solvant, la pièce étant en outre recouverte avec au moins une couche de peinture.

L'invention sera décrite ci-après dans le cadre de son application à la réparation d'une aube de soufflante de moteur aéronautique à turbine à gaz.

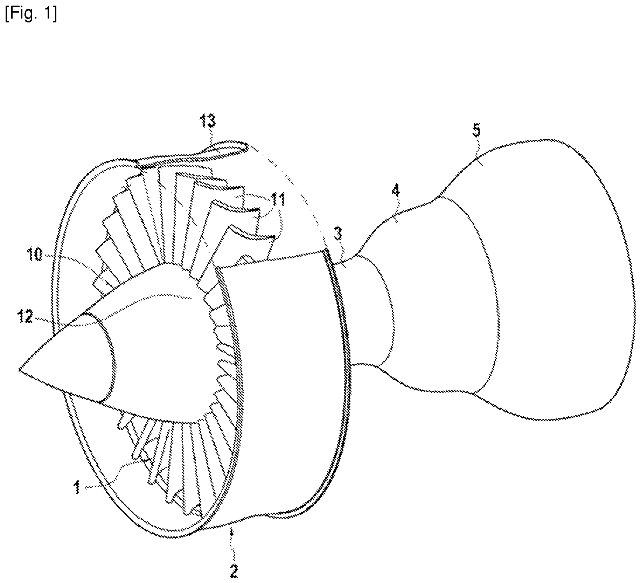

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

La soufflante 1 comprend une roue mobile 10 composée d'une pluralité d'aubes 11 chacune montée sur un rotor de turbine 12 et entourée par un carter de soufflante 13 présentant une forme de révolution.

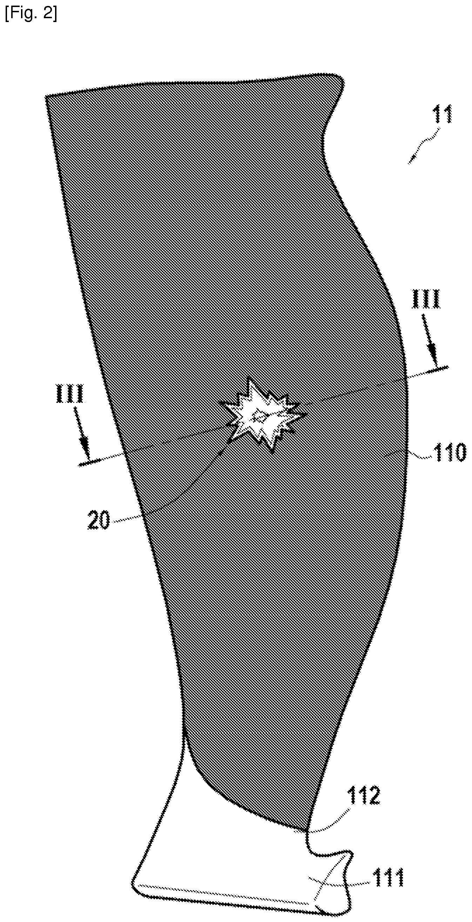

La figure 2 montre une aube de soufflante 11 qui est ici réalisé en matériau composite à matrice organique, c'est-à-dire à partir d'un renfort en fibres par exemple de carbone, verre, aramide ou céramique, densifié par une matrice en polymère, par exemple époxide, bismaléimide ou polyimide. Le renfort fibreux est réalisé à partir d'une texture fibreuse obtenue par tissage tridimensionnel en une seule pièce, la texture étant mise en forme dans un outillage. Le renfort fibreux ainsi constitué est ensuite densifié par une matrice, par exemple suivant le procédé bien connu de moulage par injection dit « RTM ». La fabrication d'une telle aube est notamment décrite dans le document US 2016/243777.

D'une manière générale, le renfort fibreux de la pièce en matériau composite peut être réalisé à partir d'une texture fibreuse en fibres de diverses natures, en particulier des fibres de carbone, de verre ou de céramique (par exemple carbure de silicium) ou de carbone. La texture fibreuse utilisée peut être de diverses natures et formes telles que notamment:
- tissu bidimensionnel (2D),
- tissu tridimensionnel (3D) obtenu par tissage 3D ou multicouches tel que notamment décrit dans le document WO 2010/061140,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Le matériau composite de l'aube est recouvert d'un couche de peinture 102 masquant visuellement le matériau composite.

L'aube de soufflante 11 comprend une pale 110 s'étendant en direction longitudinale et un pied 111 formé par une partie de plus forte épaisseur, par exemple à section en forme de bulbe se raccordant par une échasse 112 à la pale 110. L'aube 11 est montée sur le rotor de turbine 12 par engagement du pied 111 dans un logement de forme correspondante aménagé à la périphérie du rotor.

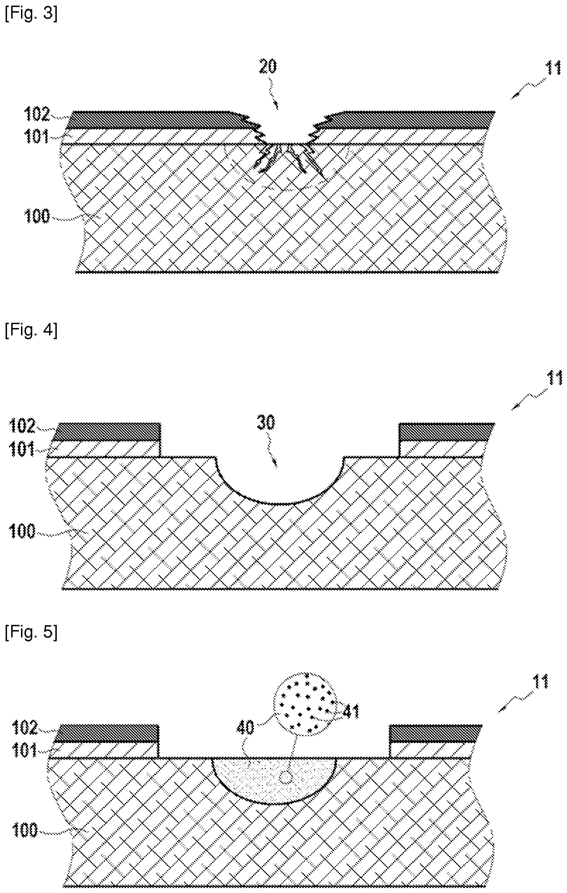

Sur les figures 2 et 3, l'aube 11 présente une zone endommagée 20 résultant par exemple d'un impact avec un objet ingéré par la soufflante du moteur, par exemple un oiseau, un débris, de la glace, etc.

Sur la figure 3 et dans l'exemple décrit ici, l'aube 11 comprend un matériau composite à matrice organique 100 définissant la forme générale de l'aube et en particulier son volume. Le matériau composite est recouvert d'une couche de peinture 102. Toujours dans l'exemple décrit ici, une couche d'un primaire 101, par exemple un primaire d'adhérence de type silane/éthanol, est préalablement déposée sur la surface du matériau composite 100 afin de favoriser l'adhésion de la couche de peinture 102. Toutefois, lorsque le matériau composite de la pièce présente un état de surface compatible avec l'accrochage d'une peinture, le dépôt préalable d'un primaire n'est pas nécessaire et la peinture peut être directement déposée sur la surface exposée du matériau composite.

Toujours sur la figure 3, on constate que la zone endommagée 20 s'étend dans les couches de peinture 102 et de primaire 101 et dans le matériau composite 100.

Avant de commencer la réparation proprement dite de la zone endommagée, le procédé peut comprendre le contrôle de l'absence d'une résine de réparation à une distance déterminée de la zone endommagée. En effet, si une réparation est déjà présente dans la pièce à une distance trop proche de la zone endommagée, par exemple à une distance inférieure à 2 mm, une nouvelle réparation n'est pas possible. Ainsi, si une ou plusieurs réparations avec une résine de réparation chargée avec des particules aptes à être détectées magnétiquement ont déjà été effectuées à une distance trop proche de la zone endommagée, cela peut être détecté. Dans un tel cas, la nouvelle réparation n'est pas réalisée car impossible et la pièce est mise au rebut.

La réparation de l'aube 11 débute par l'usinage du carter au niveau de la zone endommagée 20 afin de retirer le matériau composite touché. Plus précisément, on procède d'abord au retrait, par exemple par ponçage, de la peinture 102 et du primaire 101 au niveau de la zone endommagée 20 afin de mettre à nu le matériau composite à matrice organique 100 dans cette zone. On usine ensuite, par exemple par abrasion, le matériau composite 100 afin de retirer la portion de ce matériau qui a été endommagée. Le retrait du matériau composite est réalisé sur une surface et une profondeur déterminées de l'aube au moins la zone identifiée comme endommagée.

On obtient ainsi, comme illustrée sur la figure 4, une portion évidée 30 qui débouche sur la surface externe de l'aube 11.

Après éventuellement un dégraissage de la zone mise à nu réalisé par exemple avec de l'alcool isopropylique, on dépose une résine de réparation 40 dans la portion évidée. La résine de réparation peut notamment comprendre une résine époxyde, une résine polyuréthane, une résine BMI, une résine phtalonitrile et une résine phénolique.

Conformément à l'invention, la résine de réparation 40 est chargée avec des particules 41 aptes à être détectées magnétiquement comme illustrée sur la figure 5.

Selon un premier aspect de l'invention, les particules aptes à être détectées magnétiquement sont des particules de matériau ferromagnétique. Le matériau ferromagnétique utilisé pour réaliser les particules peut être notamment de la ferrite, du samarium de cobalt, du néodyme-fer-bore ou du nickel. Les matériaux ferromagnétiques possèdent la propriété de devenir magnétiques, c'est-à-dire de s'aimanter, lorsqu'ils sont placés dans un champ magnétique et de conserver une partie de ce magnétisme lorsque le champ est supprimé. Le champ magnétique émis par des particules ferromagnétiques peut être détecté à l'aide d'un magnétomètre. Afin d'être facilement détectables, il est préférable d'avoir une quantité substantielle de particules ferromagnétiques dans la résine de réparation. La résine de réparation contient entre 10% et 50% en masse de particules de matériau ferromagnétique, préférentiellement 30%. La taille des particules ferromagnétiques varie du nanomètre au millimètre.

Selon un deuxième aspect de l'invention, les particules aptes à être détectées magnétiquement sont des particules de matériau paramagnétique ou superparamagnétique. A la différence des matériaux ferromagnétiques, les matériaux paramagnétiques ou superparamagnétiques n'émettent pas de champ magnétique naturellement. Ces matériaux acquièrent une aimantation de même sens que le champ magnétique dans lequel on les plonge mais perdent cette aimantation lorsqu'on les sort du champ magnétique. En d'autres termes, des particules en matériau paramagnétique ou superparamagnétique n'ont une réponse magnétique que lorsqu'elles sont excitées par un autre champ magnétique. Le matériau paramagnétique ou superparamagnétique utilisé pour réaliser les particules peut être notamment de la nano-ferrite ou du nickel monocristallin. Dans le cas du nickel monocristallin, il s'agit de nickel hypertrempé, l'hypertrempe étant un refroidissement rapide ne permettant pas la formation de martensite. Après l'hypertrempe, on obtient un acier austénitique (austénite matéstable) avec une limite élastique assez basse, de l'ordre de 200 MPa.

La présence de particules paramagnétiques ou superparamagnétiques peut être détectée avec une sonde composée d'une inductance (bobine) excitée par une tension alternative ayant une fréquence fu et dans laquelle on mesure la fréquence fi du courant circulant dans l'inductance. Tout écart de valeur constaté entre fu et fi indique la présence d'une perturbation due à la présence d'une réponse magnétique du matériau des particules.

Les particules paramagnétiques ou superparamagnétiques présentent l'avantage d'être détectables à des niveaux de concentration relativement faibles. Dans le cas de particules de matériau paramagnétique ou superparamagnétique, la résine de réparation contient entre 1% et 10% en masse de particules de matériau ferromagnétique, préférentiellement 3%. La taille des particules paramagnétiques ou superparamagnétiques varie du nanomètre au millimètre. Par conséquent, l'utilisation de paramagnétiques ou superparamagnétiques permet de réduire la quantité de particules présentes dans la résine de réparation par rapport aux particules ferromagnétiques et maintenir quasiment inchangées les propriétés mécaniques de la résine.

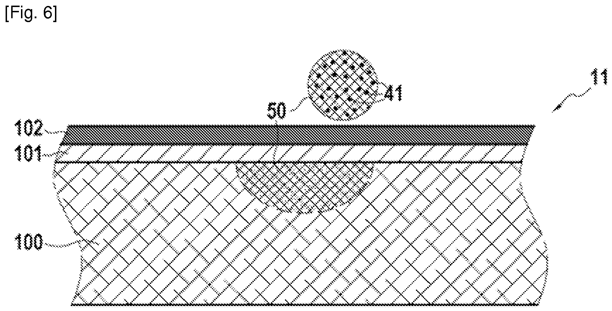

Une fois déposée dans l'évidement 30, la résine de réparation 40 chargée des particules aptes à être détectées magnétiquement 41 est soumis à un traitement de réticulation, par exemple un traitement thermique, permettant d'obtenir une portion de réparation 50 comprenant toujours les particules aptes à être détectées magnétiquement 41 comme illustré sur la figure 6. Une couche de primaire et une couche de peinture sont déposées sur la zone mise à nu afin de reconstituer la couche de primaire 101 et la couche de peinture 102 présentes sur le revêtement composite 100 de l'aube 11.

L'invention permet ainsi de détecter n'importe quelle portion de réparation dans une pièce en matériau composite, et ce de manière non destructive pour la ou les couches de revêtement présentes sur la surface du matériau composite réparé. De manière non limitative, l'invention s'applique avantageusement à un carter, un panneau acoustique, des aubes directrices de sortie (OGV) et à une nacelle de moteur à turbine à gaz.

## Revendications

1. Procédé de réparation d'une pièce (11) en matériau composite à matrice organique (100) recouverte d'au moins une couche de peinture (102) comprenant les étapes suivantes :
a) le retrait de la peinture au niveau d'une zone endommagée (20) de la pièce (11),
b) le retrait du matériau composite (100) au niveau de la zone endommagée (20) de manière à former une portion évidée (30),
c) le dépôt d'une résine de réparation (40) dans la portion évidée (30),
d) la réticulation de la résine de réparation (40),
e) l'application d'au moins une couche de peinture sur la zone de réparation,
dans lequel la résine de réparation (40) est chargée avec des particules aptes à être détectées magnétiquement (41),
le procédé comprenant en outre, avant les étapes a) à e), une étape de contrôle de l'absence d'une résine de réparation chargée avec des particules aptes à être détectées magnétiquement (41) à une distance déterminée de la zone endommagée.

2. Procédé selon la revendication 1, dans lequel les particules aptes à être détectées magnétiquement (41) sont des particules de matériau ferromagnétique.

3. Procédé selon la revendication 2, dans lequel la résine de réparation (40) contient entre 10% et 50% en masse de particules de matériau ferromagnétique.

4. Procédé selon la revendication 1, dans lequel les particules aptes à être détectées magnétiquement (41) sont des particules de matériau paramagnétique ou superparamagnétique.

5. Procédé selon la revendication 4, dans lequel la résine de réparation (40) contient entre 1% et 10% en masse de particules de matériau paramagnétique ou superparamagnétique.

## Patentansprüche

1. Verfahren zur Reparatur eines Teils (11) aus einem Verbundmaterial mit organischer Matrix (100), das mit zumindest einer Anstrichs-Schicht (102) bedeckt ist, umfassend die folgenden Schritte:
a) das Entfernen des Anstrichs in einer beschädigten Zone (20) des Teils (11),
b) das Entfernen des Verbundmaterials (100) in der beschädigten Zone (20) auf eine Weise, um einen ausgehöhlten Abschnitt (30) zu bilden,
c) das Abscheiden eines Reparaturharzes (40) in dem ausgehöhlten Abschnitt (30),
d) das Vernetzen des Reparaturharzes (40),
e) das Auftragen zumindest einer Anstrichs-Schicht auf die Reparaturzone,
wobei das Reparaturharz (40) mit Partikeln gefüllt ist, die dazu geeignet sind, magnetisch erfasst (41) zu werden,
wobei das Verfahren ferner vor den Schritten a) bis e) einen Schritt zur Überprüfung des Fehlens eines Reparaturharzes, das mit Partikeln gefüllt ist, die dazu geeignet sind, magnetisch erfasst (41) zu werden, in einem bestimmten Abstand zu der beschädigten Zone umfasst.

2. Verfahren nach Anspruch 1, wobei die Partikel, die dazu geeignet sind, magnetisch erfasst (41) zu werden, Partikel aus ferromagnetischem Material sind.

3. Verfahren nach Anspruch 2, wobei das Reparaturharz (40) zwischen 10 Massen-% und 50 Massen-% Partikel aus ferromagnetischem Material enthält.

4. Verfahren nach Anspruch 1, wobei die Partikel, die dazu geeignet sind, magnetisch erfasst (41) zu werden, Partikel aus paramagnetischem oder superparamagnetischem Material sind.

5. Verfahren nach Anspruch 4, wobei das Reparaturharz (40) zwischen 1 Massen-% und 10 Massen-% Partikel aus paramagnetischem oder superparamagnetischem Material enthält.

## Claims

1. A process for repairing a part (11) made of organic matrix composite material (100) coated with at least one layer of paint (102) comprising the following steps:
a) removing the paint at a damaged area (20) of the part (11),
b) removing the composite material (100) at the damaged area (20) so as to form a recessed portion (30),
c) depositing a repair resin (40) in the recessed portion (30)
d) curing the repair resin (40),
e) applying at least one layer of paint to the repair area,
wherein the repair resin (40) is loaded with magnetically detectable particles (41),
the process further comprising, prior to steps a) through e), a step of checking for the absence of a repair resin loaded with magnetically detectable particles (41) at a determined distance from the damaged area.

2. The process as claimed in claim 1, wherein the magnetically detectable particles (41) are ferromagnetic material particles.

3. The process as claimed in claim 2, wherein the repair resin (40) contains between 10% and 50% by weight of ferromagnetic material particles.

4. The process as claimed in claim 1, wherein the magnetically detectable particles (41) are paramagnetic or superparamagnetic material particles.

5. The process as claimed in claim 4, wherein the repair resin (40) contains between 1% and 10% by weight of paramagnetic or superparamagnetic material particles.
